Europäisches Patentamt

European Patent Office

Office européen des brevets

(11) Numéro de publication: **0 093 037**
A2

## (12) DEMANDE DE BREVET EUROPEEN

(21) Numéro de dépôt: 83400753.6

(22) Date de dépôt: **15.04.83**

(51) Int. Cl.³: **A 22 C 15/00**
**A 22 C 11/12**

(30) Priorité: **26.04.82 FR 8207160**

(43) Date de publication de la demande:
**02.11.83 Bulletin 83/44**

(84) Etats contractants désignés:
**AT BE CH DE FR GB IT LI LU NL SE**

(71) Demandeur: **ETABLISSEMENTS PHILIPPE LASSOUDRY**
**9, rue des Lances Z.I. Senia**
**F-94310 Orly(FR)**

(72) Inventeur: **Lassoudry, Daniel Yves Jacques**
**8, rue de la Beauceronne**
**F-91750 Chevannes(FR)**

(74) Mandataire: **Beauchamps, Georges et al,**
**Cabinet Z.Weinstein 20, avenue de Friedland**
**F-75008 Paris(FR)**

(54) **Procédé de fabrication de produits, notamment alimentaires, tels que par exemple des saucissons ou analogues, et installation pour la mise en oeuvre de ce procédé.**

(57) La présente invention concerne un procédé et une installation de fabrication de produits notamment alimentaires tels que des saucissons par exemple.

L'installation de l'invention comprend une machine à remplir (2) un tube souple ou boyau (3), une machine (5) pour portionner ledit tube (3) rempli pour fabriquer des produits (1) par pose d'éléments d'obturation (6). Elle comprend de plus un dispositif d'alimentation (8, 9, 10) d'un câble de manutention (11) ledit câble étant guidé jusqu'au dispositif de pose des éléments d'obturation (6) de manière à insérer ledit câble (11) entre un élément d'obturation (6a) et le tube (3) pour ainsi relier ensemble les produits (1) et réaliser un chapelet qui peut être facilement manipulé avec un dispositif d'accrochage (19).

La présente invention s'applique notamment dans l'industrie alimentaire.

FIG. 1

1

<u>Procédé de fabrication de produits, notamment alimen-</u>
<u>taires tels que par exemple des saucissons ou analo-</u>
<u>gues, et installation pour la mise en oeuvre de ce</u>
<u>procédé</u>

La présente invention concerne un procédé pour la
fabrication de produits notamment alimentaires et une
installation pour la mise en oeuvre de ce procédé.

La présente invention a plus particulièrement pour
objet un procédé de fabrication de produits alimentaires tels que des saucissons ou analogues permettant de
produire des saucissons pouvant être accrochés et
manutentionnés automatiquement.

On connaît déjà des procédés de fabrication de produits
tels que saucissons ou analogues fabriqués par poussée
d'une matière telle que de la viande hachée dans un
boyau, le boyau étant portionné par notamment la pose
d'éléments d'obturation sur ledit boyau tels que des
clips, des liens de serrage. Pour la manipulation de
ces produits, dans les procédés connus on fixait
simultanément au clip et à une extrémité dudit saucisson une boucle préformée. Ensuite, on enfilait une
barre de suspension dans lesdites boucles pour suspendre les saucissons et les traiter, par exemple, par
cuisson ou séchage.

Ces procédés présentent de nombreux inconvénients, et notamment demandent une manipulation importante des saucissons produits pour leur accrochage sur une barre de suspension. Cette dernière opération qui est réalisée manuellement est lente et limite la cadence de production de l'installation, notamment vis-à-vis des cadences de production possibles avec les machines à remplir et à portionner automatiques.

La présente invention a pour but de résoudre notamment cet inconvénient en proposant un procédé de fabrication de produits permettant la manutention et l'accrochage automatique des produits obtenus à partir d'une machine à remplir un tube et une machine à portionner. En conséquence, comme la cadence de production de l'installation n'est plus limitée par l'étape d'accrochage des produits sur une barre de suspension, cette cadence peut être notablement augmentée tout en limitant au minimum l'intervention manuelle sur la chaîne de fabrication.

A cet effet, l'invention a pour objet un procédé de fabrication de produits notamment alimentaires tels que, par exemple des saucissons ou analogues, du type consistant à remplir une première portion d'un tube souple tel qu'un boyau en matière synthétique ou d'origine naturelle avec une matière telle que, par exemple, de la viande hachée, puis à obturer par pose d'un élément d'obturation tel qu'un clip, une attache ou analogue, d'une part l'extrémité de ladite première portion de tube remplie et d'autre part l'extrémité adjacente du tube devant être rempli, à sectionner ledit tube entre les deux points d'obturation ainsi réalisés pour obtenir le produit, et à recommencer ces opérations jusqu'à remplissage total du tube, puis à traiter simultanément par exemple par cuisson, séchage et analogue, les portions de tube remplies ainsi obtenues, caractérisé en ce qu'il consiste également à relier par une de leurs extrémités chacune desdites portions de tube remplies à un même câble de manutention par exemple un fil, une ficelle ou analogue, de manière espacée pour former sensiblement un chapelet de produits, à couper ledit câble lorsque le chapelet obtenu comprend un nombre désiré de produits, à accrocher ledit chapelet à une barre de suspension ou de manutention par accrochage simultané desdits câbles de manutention au niveau de chaque intervalle entre deux produits adjacents pour pouvoir manipuler ledit chapelet pour effectuer ledit traitement des produits.

Selon une caractéristique de l'invention, l'étape précitée de relier une extrémité de chaque portion de tube remplie précitée au câble de manutention précité est effectuée simultanément à l'obturation précitée de l'extrémité de ladite portion de tube remplie par insertion du câble entre le tube et l'élément d'obturation précité avant l'application dudit élément sur ledit tube.

Selon encore une autre caractéristique de l'invention, l'étape précitée de relier une extrémité d'une portion de tube remplie au câble de manutention précité est effectuée simultanément à l'obturation précitée de l'extrémité dudit tube devant être rempli par insertion dudit câble entre le tube et l'élément d'obturation précité avant son application sur ledit tube.

Avantageusement, le câble de manutention est maintenu à l'état tendu notamment au niveau de son insertion entre le tube et un élément d'obturation précité.

Ainsi, on évite les risques de sectionnage du câble de manutention lors de la coupe du tube pour séparer la portion de tube remplie du reste du tube à remplir.

Selon une nouvelle caractéristique de l'invention, les portions de tube remplies précitées reliées audit câble de manutention sont disposées côte à côte sur une surface de réception pour permettre ainsi l'accrochage du chapelet de produits à une barre de suspension. Cet accrochage peut être réalisé automatiquement.

L'invention vise également une installation pour la mise en oeuvre de ce procédé qui comprend notamment une machine à remplir le tube souple précité, par exemple par poussée d'une matière telle que par exemple de la viande hachée, une machine pour portionner ledit tube rempli comportant un dispositif pour la pose des éléments d'obturation précités et un dispositif pour couper ledit tube, et un dispositif de réception desdites portions de tube remplies ainsi produites. Cette installation se caractérise en ce qu'elle comprend un dispositif d'alimentation, tel qu'une bobine ou analogue du câble de manutention précité, des moyens pour guider ledit câble depuis ledit dispositif d'alimentation jusqu'au dispositif précité de pose d'éléments d'obturation et pour insérer ledit câble entre un élément d'obturation et ledit tube avant la pose dudit élément d'obturation, un dispositif de coupe dudit câble de manutention disposé en aval de ladite machine à portionner et un dispositif pour accrocher les chapelets précités de produits obtenus.

Selon une caractéristique de l'invention, et dans le cas où le dispositif de pose de l'élément d'obturation de la machine à portionner permet d'appliquer simultanément sur ledit tube un premier élément d'obturation pour obturer l'extrémité de la portion du tube remplie et un second élément d'obturation pour obturer l'extrémité adjacente du tube à remplir, le dispositif de coupe de ladite machine sectionnant le tube entre ces deux éléments d'obturation, les moyens de guidage du câble de manutention précité insèrent ledit câble entre le tube et le premier élément d'obturation avant l'application de celui-ci sur le tube.

Avantageusement, le dispositif d'alimentation du câble et/ou les moyens de guidage comprennent un moyen pour maintenir ledit câble à l'état tendu.

Selon une autre caractéristique de l'invention, le dispositif de coupe du câble de manutention comprend un compteur des produits défilant devant ledit dispositif de coupe pour émettre un signal d'actionnement dudit dispositif de coupe quand le nombre de produits ayant défilé correspond au nombre désiré de produits par chapelet.

Pour permettre une automatisation de l'installation, le dispositif de réception des produits ou des portions de tube remplies est une bande transporteuse animée d'un mouvement pas à pas commandé avantageusement par la machine à portionner précitée, ladite bande transporteuse comportant sur sa face porteuse une pluralité de logements pour recevoir lesdits produits.

Ainsi, les produits reliés ensemble sous forme de chapelets sont disposés sur une surface sensiblement plane côte à côte et de manière alignée, ainsi le câble les reliant peut être aisément saisi par le dispositif d'accrochage de la présente invention.

Ce dispositif est avantageusement une barre pourvue de crochets disposés de manière espacée de préférence régulièrement sur la longueur de ladite barre.

La distance entre les crochets extrêmes de la barre de suspension et les crochets respectivement adjacents est plus grande que celle séparant deux crochets intermédiaires pour ainsi suspendre les produits à sensiblement même hauteur les uns des autres sans manipulation.

Selon une autre caractéristique de l'invention, le dispositif d'alimentation précité du câble de manutention précité, en aval de la bobine d'alimentation, comprend un moyen de dévidage d'une longueur prédéterminée dudit câble entre des premier et second moyens de pinçage temporaire dudit câble; ledit dispositif d'alimentation étant conçu de façon que lorsque ledit dispositif de dévidage est en position étendue, ledit premier moyen de pinçage, en amont dudit moyen de dévidage, laisse défiler le câble tandis que ledit second moyen de pinçage, en aval dudit moyen de dévidage, pince ledit câble; et lorsque ledit moyen de dévidage est en position rétractée, ledit premier moyen de pinçage pince ledit câble tandis que ledit second moyen de pinçage laisse défiler ledit câble de ladite longueur prédéterminée, notamment sous l'effet du propre poids du produit alimentaire précité.

L'invention sera mieux comprise et d'autres caractéristiques, détails et avantages de celle-ci apparaîtront plus clairement au cours de la description explicative qui va suivre faite en référence aux dessins schématiques annexés donnés uniquement à titre d'exemple et illustrant un mode de réalisation de l'invention, dans lesquels :

La figure 1 est une vue schématique en perspective d'un mode de réalisation de l'installation conforme à l'invention,

La figure 2 est une vue en élévation illustrant un chapelet de produits obtenus conformément à l'invention accroché à une barre de suspension, et

La figure 3 est une vue schématique d'un mode de réalisation du dispositif d'alimentation du câble de manutention selon l'invention.

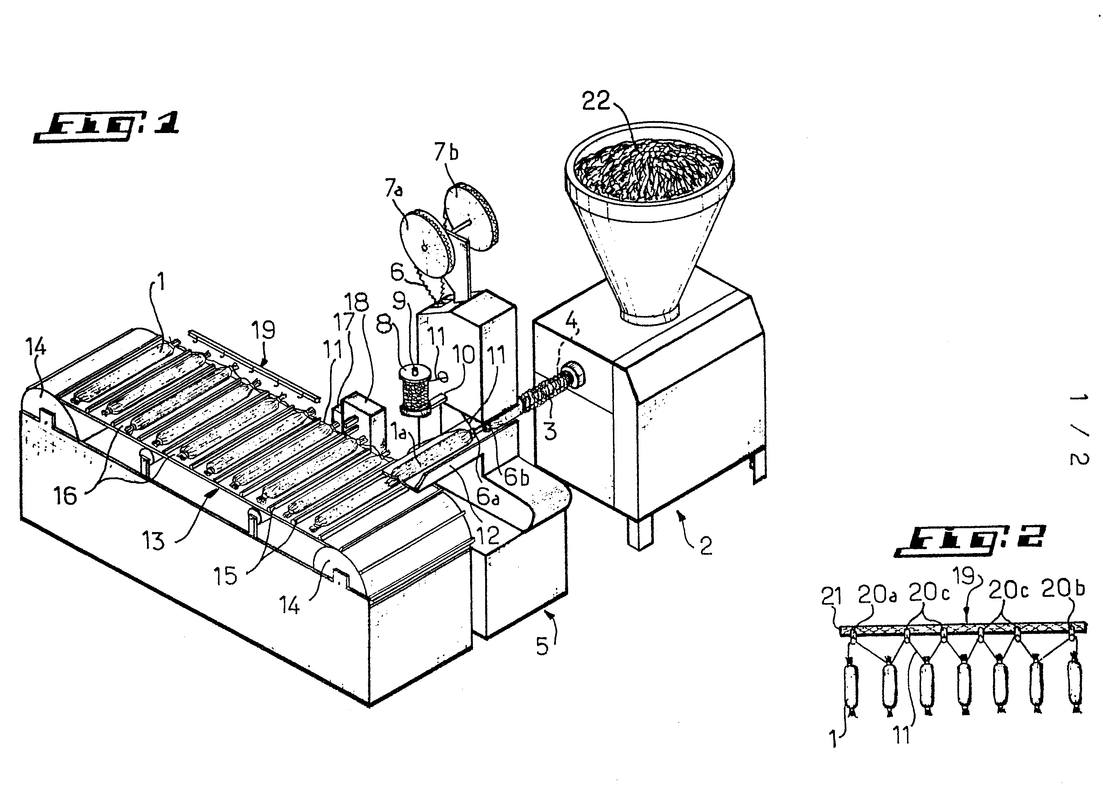

En se référant notamment à la figure 1, une installation de fabrication de produits 1 notamment alimentaires tels que par exemple des saucissons ou analogues comprend de manière classique une machine 2 à remplir un tube 3 par, par exemple poussée d'une matière 22 dans ledit tube 3 ou boyau, ce dernier étant enfilé sur un conduit support 4. Bien entendu, le tube 3 ou boyau est constitué par une matière synthétique ou est d'origine naturelle, par exemple animale.

L'installation comprend ensuite une machine 5 portionneuse permettant de diviser en portions 1 le tube 3 après que ladite portion ait été remplie, pour ainsi réaliser des produits 1 ou saucissons de longueur déterminée, ou de poids déterminé.

Dans le mode de réalisation illustré, la machine portionneuse 5 est une machine permettant d'obturer le tube 3 par application d'éléments d'obturation 6 tels que des clips alimentés à partir des bobines 7a, 7b et refermés sur le tube 3 par, par exemple une matrice (non représentée).

Il est bien entendu que l'on peut utiliser comme élément d'obturation 6 des attaches, des clips en aluminium ou autre métal, en matière synthétique ou analogues.

Dans le mode de réalisation illustré, la machine 5 à portionner ou clipeuse applique simultanément sur le boyau 3 deux clips 6a, 6b de manière à fermer l'extrémité de la portion 1a de boyau 3 et à fermer l'autre extrémité adjacente du boyau 3 devant être rempli. Cette machine 5 comprend également un dispositif de coupe (non représenté) permettant de sectionner le boyau 3 entre les deux clips 6a, 6b pour ainsi produire le saucisson 1a.

Bien entendu il est possible d'utiliser d'autres types de machine à portionner et par exemple d'utiliser des machines qui posent successivement les clips 6a, 6b, sans pour cela sortir du cadre de l'invention.

Selon un mode de réalisation préféré de l'invention on dispose une bobine 8 libre en rotation autour d'un axe 9 relié au châssis de la machine 5 à portionner par une plaque de support 10.

La bobine 8 est une bobine support d'un câble souple 11 tel que par exemple un fil, une ficelle ou analogue. Des moyens de guidage du câble 11 (non représentés) sont montés dans la machine 5 à portionner pour guider le fil vers le boyau 3, et notamment au niveau des matrices d'application des clips 6 du boyau 3. Ces moyens de guidage comprennent également un moyen permettant d'insérer le câble 11, de préférence, entre le boyau 3 et le clip 6a, avant son application par les matrices précitées sur le boyau pour obturer l'extrémité du saucisson 1a. Ainsi, lors de l'application et du serrage du clip 6a sur le boyau 3, le câble 11 sera pris avec le boyau 3.

Avantageusement, l'ensemble bobine d'alimentation 8, support 10 et axe 9 comprend des moyens pour freiner la rotation de la bobine 8 pour maintenir le câble 11 à l'état tendu. Il est également possible, pour maintenir ce câble à l'état tendu, de prévoir des moyens de tension du câble 11, par exemple par un montage élastique d'un guide-fil.

Ainsi, le câble 11 ne se trouve pas sur le passage du dispositif de coupe de la machine 5 à portionner.

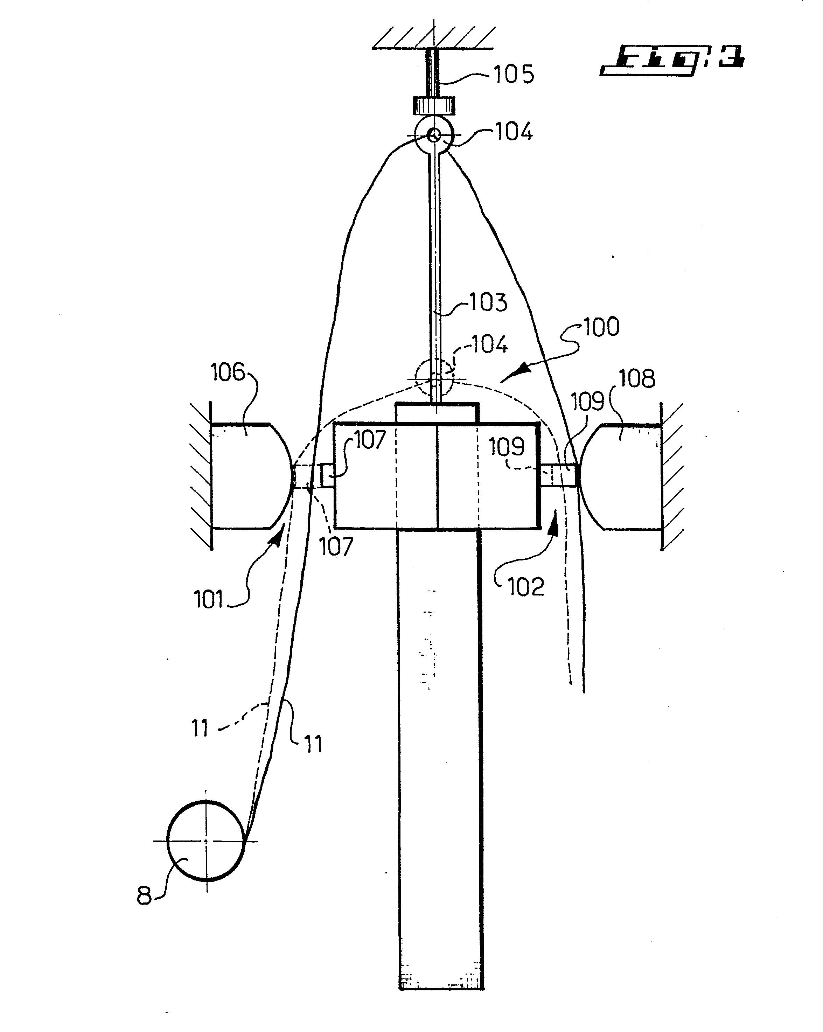

Ainsi, les différentes portions du boyau 3 remplies ou saucissons 1a sont reliées ensemble par une de leurs extrémités pour former un chapelet comme cela est clairement visible sur la figure 2.

Le saucisson 1 ainsi produit est ensuite disposé soit manuellement soit automatiquement depuis la table de support 12 sur un tapis transporteur 13 monté en rotation autour de tambours 14. La face de transport de la bande transporteuse comprend avantageusement des baguettes 15 disposées transversalement et délimitant entre elles un certain nombre de logements 16 successifs pour recevoir les produits ou saucissons 1.

Avantageusement, la bande transporteuse 13 est animée d'un mouvement pas à pas commandé par la machine 5 à portionner.

Les produits ou saucissons 1 sont disposés transversalement à la bande transporteuse côte à côte et défilent sous un compteur 17. Quand le nombre de produits 1 qui ont défilé sous le compteur 17 correspond à un nombre prédéterminé de produits, ce compteur émet un signal actionnant un système de coupe schématiquement illustré en 18 qui coupe le câble 11 de manutention entre deux produits 1 adjacents.

Ainsi, on a sur la bande transporteuse un chapelet comprenant un nombre prédéterminé de produits ou saucissons 1 qui sont prêts à être traités, par exemple à être cuits ou séchés de préférence simultanément.

Selon l'invention pour prélever ce chapelet, il suffit par exemple à un opérateur de prendre ledit chapelet avec un dispositif d'accrochage 19.

Dans le mode de réalisation illustré, ce dispositif d'accrochage est constitué par une barre de suspension 21 et une pluralité de crochets 20 disposés de manière espacée sur ladite barre.

Il est aisé de comprendre que le nombre de crochets de la barre de suspension correspond de préférence au nombre d'intervalles entre les produits d'un chapelet.

Ainsi, selon l'invention, le manipulateur peut en effectuant une seule opération suspendre un chapelet de produits, par exemple un chapelet comprenant cinq saucissons 1.

Bien entendu, la manipulation de la barre 19 peut être réalisée soit manuellement soit automatiquement.

Selon l'invention, et comme cela est clairement représenté sur la figure 2, pour permettre de suspendre les produits 1 du chapelet à des hauteurs sensiblement égales, les deux crochets extrêmes 20a, 20b du dispositif d'accrochage 19 sont séparés du crochet intermédiaire adjacent 20c d'une distance supérieure à l'intervalle séparant deux crochets intermédiaires 20c.

L'invention propose donc un procédé et une installation permettant la fabrication de produits notamment alimentaires tels que des saucissons permettant de réaliser des chapelets de produits, ledit chapelet pouvant être accroché à une barre de suspension par une seule opération ce qui permet de diminuer le temps destiné à la manutention des produits et d'autre part d'automatiser cette manutention. L'invention a donc comme effet d'augmenter la vitesse de production d'une installation de fabrication de produits tels que des saucissons tout en diminuant la main d'oeuvre et donc le coût de fabrication de ces produits.

Bien entendu, la forme de la bande transporteuse 13, le moyen d'entraînement de celle-ci, la nature du câble de manutention 11, le système d'alimentation de ce câble peuvent être quelconques.

En se référant à la figure 3, le dispositif d'alimentation du câble de manutention 11, en aval de la bobine d'alimentation 8, comprend un moyen de dévidage ou de déroulage 100 d'une longueur prédéterminée du câble 11 prévu entre des premier 101 et second 102 moyens de pinçage ou blocage temporaire du câble 11. Le dispositif d'alimentation est conçu de façon que lorsque le moyen de dévidage 100 est en position étendue (représentée en traits continus sur la figure), le premier moyen de pinçage 101, en amont du moyen de dévidage 100, laisse défiler le câble 11 tandis que le second moyen de pinçage 102, en aval du moyen de dévidage 100, pince ou bloque le câble 11. de façon à ainsi dévider ladite longueur prédéterminée du câble. De même, lorsque le moyen de dévidage 100 est en position rétractée (représentée en traits mixtes sur la figure), le premier moyen de pinçage 101 pince ou bloque le câble 11, tandis que le second moyen de pinçage 102 laisse défiler le câble 11 de ladite longueur prédéterminée, notamment sous l'effet du propre poids du produit alimentaire, en particulier un saucisson.

Comme dans l'exemple représenté, le moyen de dévidage 100 peut être réalisé sous forme d'un vérin ou tige coulissante 103 dont l'extrémité libre 104 est munie d'un oeillet permettant le passage du câble de manutention 11; le mouvement de ladite tige ou vérin étant limité par une butée 105. Ainsi, la longueur de câble 11 dévidée correspond sensiblement à deux fois la longueur de ladite tige. De plus, les moyens de pinçage 101, 102, respectivement, peuvent être réalisés sous forme de vérins 107, 109, respectivement, coopérant avec des pièces formant butée 106, 108, respectivement, pour pincer le câble 11. Ces vérins peuvent être notamment des vérins à simple action sollicités par ressort.

La commande des moyens de dévidage et de pinçage peut être réalisée par des moyens pneumatiques, par exemple, ou tout autre moyen approprié. Grâce à ces derniers, on commande, en même temps, le déplacement du vérin de dévidage du câble et l'un des vérins de pinçage du câble.

En plus de détails, ce dispositif d'alimentation fonctionne comme suit.

Dans un premier temps, sous l'effet des moyens de commande appropriés précités, le vérin ou tige 103 se déplace dans sa position étendue, en même temps que le vérin pinceur 109 pince le câble 11 contre la pièce 108, tandis que le vérin 107, en position rétractée, laisse le câble 11 se dérouler de la bobine 8 d'une longueur correspondant à sensiblement deux fois la longueur de la tige 103. Dans un deuxième temps, le vérin ou tige 103 est amené en position rétractée, en même temps que le vérin 107 pince le câble 11 contre la pièce 106 et que le vérin 109, en position rétractée, laisse le câble 11 défiler, de la longueur précitée, notamment sous l'effet du propre poids du produit alimentaire tel qu'un saucisson.

Revendications

1. Procédé de fabrication de produits notamment alimentaires tels que, par exemple, des saucissons ou analogues, du type consistant à remplir une première portion d'un tube souple tel qu'un boyau en matière synthétique ou d'origine naturelle, avec une matière telle que, par exemple, de la viande hachée, puis à obturer par pose d'un élément d'obturation tel qu'un clip, une attache ou analogue d'une part l'extrémité de ladite première portion de tube remplie et d'autre part l'extrémité adjacente du tube devant être rempli, à sectionner ledit tube entre les deux points d'obturation ainsi réalisés pour obtenir ledit produit, et recommencer ces opérations jusqu'à remplissage total du tube, puis à traiter simultanément par exemple par cuisson, séchage ou analogue, les portions de tube remplies ainsi obtenues, caractérisé en ce qu'il consiste également à relier par l'une de leurs extrémités, chaque portion de tube remplie à un même câble souple de manutention tel qu'un fil, une ficelle ou analogue, de manière espacée pour former sensiblement un chapelet de produits, à couper ledit câble lorsque le chapelet obtenu comprend un nombre prédéterminé de produits, à accrocher ledit chapelet à un dispositif de suspension ou de manutention par accrochage simultané dudit câble de manutention au niveau de chaque intervalle entre les produits pour pouvoir manipuler ledit chapelet en vue du traitement précité desdits produits.

2. Procédé selon la revendication 1, caractérisé en ce que l'étape précitée de relier une extrémité de chaque portion de tube remplie précitée au câble de manutention précité est réalisée simultanément à l'obturation précitée de l'extrémité de ladite portion de tube remplie par insertion dudit câble entre le tube et l'élément d'obturation précité avant l'application de celui-ci sur ledit tube.

3. Procédé selon la revendication 1, caractérisé en ce que l'étape précitée de relier une extrémité d'une portion de tube remplie précitée au câble de manutention précité est réalisée simultanément à l'obturation précitée de l'extrémité dudit tube devant être rempli par insertion dudit câble entre le tube et l'élément d'obturation précité avant l'application de celui-ci sur ledit tube.

4. Procédé selon l'une des revendications 1 à 3, caractérisé en ce que le câble de manutention précité est maintenu à l'état tendu, notamment au niveau de son insertion entre le tube précité et un élément d'obturation précité.

5. Procédé selon l'une des revendications 1 à 4, caractérisé en ce que les portions de tube remplies précitées reliées au câble de manutention précité sont disposées côte à côte sur une surface de réception pour permettre l'accrochage précité, notamment automatiquement, d'un chapelet de produits à une barre de suspension.

6. Installation pour la mise en oeuvre du procédé selon l'une des revendications précédentes, comprenant une machine à remplir le tube souple précité par exemple par poussée d'une matière telle que de la viande hachée par exemple, une machine pour portionner ledit tube rempli, ladite machine pour portionner comportant un dispositif pour la pose d'éléments d'obturation dudit tube et un dispositif pour couper ledit tube, et un dispositif de réception desdites portions de tube remplies ainsi produites, caractérisée en ce qu'elle comprend un dispositif d'alimentation (8, 9, 10) tel qu'une bobine ou analogue d'un câble de manutention (11) tel qu'un fil, une ficelle ou analogue, des moyens pour guider ledit câble (11) depuis ledit dispositif d'alimentation (8, 9, 10) jusqu'au dispositif précité de pose d'éléments d'obturation (6) et pour insérer ledit câble (11) entre un élément d'obturation (6a) et ledit tube (3) avant l'application dudit élément d'obturation, un dispositif de coupe (18) dudit câble disposé en aval de ladite machine (5) à portionner et un dispositif (19) pour accrocher les chapelets de produits (1) ainsi obtenus.

7. Installation selon la revendication 6, dont la machine à portionner précitée comprend un dispositif permettant de poser simultanément sur le tube précité un premier élément d'obturation pour obturer l'extrémité de la portion de tube remplie et un second élément d'obturation pour obturer l'extrémité adjacente du tube devant être rempli, le dispositif de coupe précité de ladite machine à portionner sectionnant le tube entre ces deux éléments d'obturation, caractérisée en ce que les moyens de guidage précités du câble insèrent ledit câble de manutention (11) entre le tube (3) et ledit premier élément d'obturation (6a) avant l'application de celui-ci sur le tube (3).

8. Installation selon la revendication 6 ou 7, caractérisée en ce que le dispositif d'alimentation (8, 9, 10) du câble (11) et/ou les moyens de guidage précités dudit câble comprennent un moyen pour maintenir ledit câble (11) à l'état tendu.

9. Installation selon l'une des revendications 6 à 8, caractérisée en ce que le dispositif de coupe (18) du câble de manutention (11) précité comprend un compteur (17) pour compter les produits (1) défilant devant ledit dispositif de coupe (18), ledit compteur émettant un signal d'actionnement dudit dispositif de coupe (18) quand le nombre compté de produits est égal à un nombre prédéterminé de produits (1).

10. Installation selon l'une des revendications 6 à 9, caractérisée en ce que le dispositif de réception (13) précité des portions de tube remplies (1) est une bande transporteuse animée d'un mouvement pas à pas commandé avantageusement par la machine à portionner (5) précitée, ladite bande transporteuse (13) comportant sur sa face porteuse des logements (16) successifs pour recevoir lesdits produits (1).

11. Installation selon l'une des revendications 6 à 10, caractérisée en ce que le dispositif d'accrochage (19) précité est une barre (21) pourvue de crochets (20) disposés de manière espacée, de préférence régulièrement, sur la longueur de ladite barre.

12. Installation selon la revendication 11, caractérisée en ce que la distance entre les crochets extrêmes (20a, 20b) du dispositif d'accrochage (19) précité et les crochets intermédiaires (20c) adjacents est plus grande que celle séparant deux crochets (20c) intermédiaires.

13. Installation selon l'une des revendications 6 à 12, caractérisée en ce que le dispositif d'alimentation précité du câble de manutention (11) précité, en aval de la bobine d'alimentation (8), comprend un moyen de dévidage (100) d'une longueur prédéterminée dudit câble (11) prévu entre les premier (101) et second (102) moyens de pinçage temporaire dudit câble (11); ledit dispositif d'alimentation étant conçu de façon que lorsque ledit moyen de dévidage (100) est en position étendue ledit premier moyen de pinçage (101), en amont dudit moyen de dévidage (100), laisse défiler le câble (11) tandis que ledit second moyen de pinçage (102), en aval dudit moyen de dévidage (100). pince ledit câble (11), et , lorsque ledit moyen de dévidage (100) est en position rétractée, ledit premier moyen de pinçage (101) pince ledit câble (11) tandis que ledit second moyen de pinçage (102) laisse défiler ledit câble (11) de ladite longueur prédéterminée, notamment sous l'effet du propre poids du produit alimentaire précité.

Fig.1

Fig.2

Fig. 3